# EUROPEAN PATENT APPLICATION

(11) **EP 4 394 496 A1**
(43) Date of publication of application: **03.07.2024**
(21) Application number: 23209330.2
(22) Date of filing: 13.11.2023
(51) Int. Cl.: G02F 1/21, G02F 1/225, G02F 1/03, G02F 1/035

(54) **OPTICAL WAVEGUIDE ELEMENT, OPTICAL MODULATOR, AND OPTICAL TRANSMISSION DEVICE**

(30) Priority: 26.12.2022 JP 2022208979
(71) Applicant: Sumitomo Osaka Cement Co., Ltd., Tokyo, 105-8641 (JP)
(72) Inventor: HAYAMI, Yuji, Tokyo, 105-8641 (JP); OKAHASHI, Kosuke, Tokyo, 105-8641 (JP)
(74) Representative: Becker, Eberhard

(57) **Abstract**

An optical waveguide element (3) includes an optical waveguide (31) arranged on a main surface of an optical substrate (30), and a control electrode (42) controlling light waves propagating through the optical waveguide. The control electrode includes a first control electrode (43) and a second control electrode (44) facing each other across the optical waveguide on the main surface of the optical substrate. The first control electrode and the second control electrode each include a common electrode (43a, 44a) extending along the optical waveguide, segment electrodes (43c, 44c) arranged closer to the optical waveguide than the common electrode and divided along an extending direction of the optical waveguide, and connection electrodes (43b, 44b) connecting each of the segment electrodes to the common electrode. A low dielectric layer (45) having a lower relative dielectric constant than the optical substrate is arranged between the common electrode and the optical substrate.

## Description

### BACKGROUND

### Technical Field

The disclosure relates to an optical waveguide element, an optical modulator, and an optical transmission device.

### Description of Related Art

Optical modulators incorporating an optical modulation element as an optical waveguide element, which includes an optical waveguide formed on a substrate and a control electrode for controlling light waves propagating through the optical waveguide, are often used in high-speed/high-capacity optical fiber communication systems. Semiconductor optical modulation elements using semiconductor substrates, such as InP substrates, and LiNbO₃ (hereinafter also referred to as LN) optical modulation elements using LN as the substrates have been practically used as optical waveguide elements for performing an optical modulation operation.

In recent years, optical modulators for optical communication have been required to have a symbol rate of 100 GBaud or more as the modulation speed. Therefore, from the viewpoint of widening the frequency characteristics of optical modulation elements, electrical-optical speed matching (that is, matching between the speed of light propagating through the optical waveguide and the propagation speed of the high frequency signal propagating through the control electrode) and impedance matching (that is, matching between the impedance of the control electrode and the output impedance of the drive circuit that outputs the high frequency signal to the control electrode) are important.

Conventionally, a control electrode having a capacity loaded type traveling wave electrode structure with a high degree of freedom in impedance adjustment has been proposed as a means for achieving the impedance matching (see, for example, Patent Document 1). In this control electrode, an RF electrode for propagating a high frequency signal is arranged on a dielectric layer formed on a substrate, and a plurality of segment electrodes divided in the extending direction of the optical waveguide are arranged on the substrate. Each segment electrode is connected to the RF electrode by a conductor that penetrates the dielectric layer to apply a high frequency electric field to the optical waveguide. Thus, in the conventional control electrode described above, the propagation speed of the high frequency signal in the RF electrode portion is increased to achieve optical-electrical speed matching.

However, there have been demands for smaller size, wider bandwidth, and lower driving voltage, and for the conventional control electrode described above, when the distance between the RF electrode on the dielectric layer and the ground electrode is reduced in order to shorten the distance between segment electrodes that sandwich the optical waveguide on the substrate, the propagation speed of the high frequency signal in the RF electrode may drop. As a result, optical-electrical speed matching may become difficult, making it difficult to achieve low voltage driving at a high modulation speed.

### Related Art

### Patent Document

[Patent Document 1] Japanese Patent Application Laid-Open No. 2016-194544

### SUMMARY

### Problems to be Solved

In view of the above background, an object of the disclosure is to achieve low voltage driving at a high operating speed in an optical waveguide element.

### Means for Solving the Problems

One aspect of the disclosure is an optical waveguide element that includes an optical waveguide arranged on a main surface of an optical substrate; and a control electrode configured to control light waves propagating through the optical waveguide. The control electrode includes a first control electrode and a second control electrode facing each other across the optical waveguide on the main surface of the optical substrate. Each of the first control electrode and the second control electrode includes a common electrode extending along the optical waveguide, a plurality of segment electrodes arranged closer to the optical waveguide than the common electrode and divided along an extending direction of the optical waveguide, and a plurality of connection electrodes connecting each of the plurality of segment electrodes to the common electrode. A low dielectric layer having a relative dielectric constant lower than a relative dielectric constant of the optical substrate is arranged between the common electrode and the optical substrate.

According to another aspect of the disclosure, the low dielectric layer extends to below the connection electrodes and the segment electrodes.

According to another aspect of the disclosure, the optical waveguide includes a Mach-Zehnder type optical waveguide that includes two parallel waveguides. The control electrode includes one first control electrode arranged between the two parallel waveguides; and two second control electrodes facing the first control electrode respectively across the two parallel waveguides.

According to another aspect of the disclosure, at least a lower portion of a surface, adjacent to the optical waveguide, of the segment electrode is formed on the optical substrate without the low dielectric layer therebetween.

According to another aspect of the disclosure, the low dielectric layer includes a curved corner between a side adjacent to the optical waveguide and an upper side that is a side far from the optical substrate, in a cross section perpendicular to the extending direction of the optical waveguide.

According to another aspect of the disclosure, an other main surface of the optical substrate, opposite to the main surface on which the optical waveguide is arranged, is in contact with a low dielectric substrate composed of a low dielectric material with a relative dielectric constant of 1 or more and 10 or less.

According to another aspect of the disclosure, a buffer layer is provided between the segment electrodes and the optical substrate.

According to another aspect of the disclosure, the low dielectric layer has one or more through holes extending in a thickness direction of the low dielectric layer, and the control electrode extends through the one or more through holes to the optical substrate.

Another aspect of the disclosure is an optical modulator that includes any of the above optical waveguide element which is an optical modulation element; a housing configured to accommodate the optical waveguide element; an optical fiber configured to input light to the optical waveguide element; and an optical fiber configured to guide light output by the optical waveguide element to outside of the housing.

Another aspect of the disclosure is an optical transmission device that includes any of the above optical modulator; and an electronic circuit configured to generate an electrical signal for causing the optical waveguide element to perform an optical modulation operation.

### Effects

The disclosure is capable of achieving low voltage driving at a high operating speed in an optical waveguide element.

### BRIEF DESCRIPTION OF THE DRAWINGS

FIG. 1 is a diagram showing the configuration of the optical modulator according to the first embodiment of the disclosure.
FIG. 2 is a diagram showing the configuration of the optical modulation element used in the optical modulator shown in FIG. 1.
FIG. 3 is a partial detailed view of part A of the RF electrode part shown in FIG. 2.
FIG. 4 is a partial detailed view of part B of the RF electrode part shown in FIG. 3.
FIG. 5 is a cross-sectional view taken along line V-V of part B shown in FIG. 4.
FIG. 6 is a cross-sectional view taken along line VI-VI of part B shown in FIG. 4.
FIG. 7 is a view showing the configuration of the optical modulation element according to the first modified example.
FIG. 8 is a view showing the configuration of the optical modulation element according to the first modified example.
FIG. 9 is a view showing the configuration of the optical modulation element according to the second modified example.
FIG. 10 is a view showing the configuration of the optical modulation element according to the second modified example.
FIG. 11 is a view showing the configuration of the optical modulation element according to the third modified example.
FIG. 12 is a view showing the configuration of the optical modulation element according to the third modified example.
FIG. 13 is a view showing the configuration of the optical modulation element according to the fourth modified example.
FIG. 14 is a view showing the configuration of the optical modulation element according to the fourth modified example.

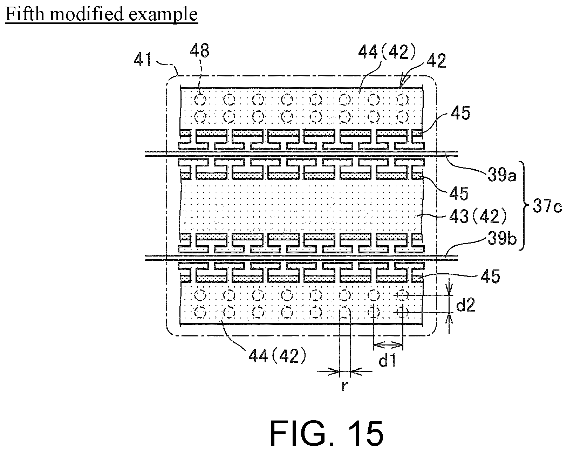

FIG. 15 is a view showing the configuration of the optical modulation element according to the fifth modified example.
FIG. 16 is a view showing the configuration of the optical modulation element according to the sixth modified example.
FIG. 17 is a view showing the configuration of the optical modulation element according to the seventh modified example.
FIG. 18 is a partial detailed view of part C shown in FIG. 17.
FIG. 19 is a cross-sectional view taken along line XVII-XVII of part C shown in FIG. 18.
FIG. 20 is a cross-sectional view taken along line XVIII-XVIII of part C shown in FIG. 18.
FIG. 21 is a diagram showing the configuration of the optical transmission device according to the second embodiment of the disclosure.

### DESCRIPTION OF THE EMBODIMENTS

Embodiments of the disclosure will be described hereinafter with reference to the drawings.

### [1. First embodiment]

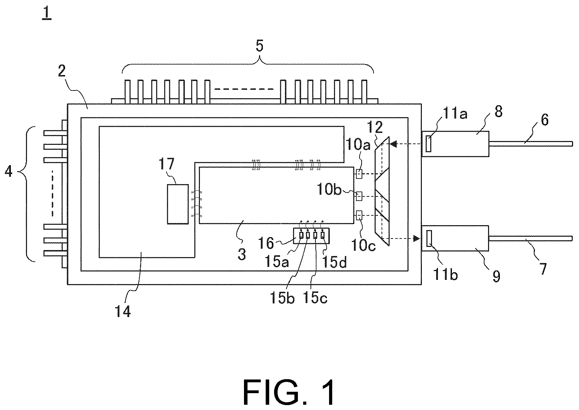

First, the first embodiment of the disclosure will be described. FIG. 1 is a diagram showing the configuration of an optical modulator 1 using an optical modulation element, which is an optical waveguide element, according to the first embodiment of the disclosure.

The optical modulator 1 includes a housing 2 and an optical modulation element 3 accommodated in the housing 2 and generating an optical modulation signal by a traveling wave operation. The optical modulation element 3 has, for example, a nested Mach-Zehnder type coherent communication modulator configuration compatible with a polarization synthesis modulation method, and is compatible with multi-level modulation formats such as DP-QPSK and QAM modulation. The housing 2 complies with, for example, the HB-CDM standard ("Implementation Agreement for the High Bandwidth Coherent Driver Modulator (HB-CDM) OIF-HB-CDM-02.0" (published by OIF on July 15, 2021)) which is the industry standard. A cover (not shown), which is a plate, is finally fixed to an opening of the housing 2, and the inside of the housing 2 is hermetically sealed.

The housing 2 is provided with a signal pin 4 for inputting a high frequency electrical signal that is used for modulating the optical modulation element 3 to a drive circuit 17 mounted on a relay substrate 14, which will be described later. The housing 2 is also provided with a signal pin 5 that is for inputting an electrical signal used for adjusting an operating point of the optical modulation element 3, inputting power supply for the operation of the drive circuit 17, and inputting and outputting a control signal required for operating the drive circuit 17.

The optical modulator 1 further includes, on the same surface of the housing 2, an input optical fiber 6 for inputting a light into the housing 2 and an output optical fiber 7 for guiding the light modulated by the optical modulation element 3 to the outside of the housing 2. In addition, the optical modulator 1 includes a beam shifter 12 that has both a beam shifting function and a polarization combining function.

The input optical fiber 6 and the output optical fiber 7 are respectively fixed to the housing 2 via a support 8 and a support 9, which are fixing members. The light input from the input optical fiber 6 is collimated by a lens 11a arranged inside the support 8, and then passes through the beam shifter 12 to be input to the optical modulation element 3 via a lens 10a. However, this is merely an example, and the light may be input to the optical modulation element 3 by, for example, introducing the input optical fiber 6 into the housing 2 via the support 8 and connecting an end surface of the introduced input optical fiber 6 to an end surface of an optical substrate 30 (which will be described later) of the optical modulation element 3, according to the conventional technique.

Two modulated lights output from the optical modulation element 3 are respectively collimated by a lens 10b and a lens 10c, and then combined into one beam by the polarization combining function of the beam shifter 12. The combined beam is focused by a lens 11b arranged inside the support 9 and coupled to the output optical fiber 7.

The relay substrate 14 and a terminator 16, which includes four terminal resistors 15a, 15b, 15c, and 15d each having a predetermined impedance, are also arranged inside the housing 2 of the optical modulator 1. Hereinafter, the terminal resistors 15a, 15b, 15c, and 15d will also be collectively referred to as terminal resistors 15. The optical modulation element 3 and the terminal resistors 15 of the terminator 16 are electrically connected by, for example, wire bonding or the like.

The relay substrate 14 includes the drive circuit 17. The drive circuit 17 amplifies the high frequency electrical signal input from the signal pin 4 and outputs a drive signal which is a high frequency electrical signal for causing the optical modulation element 3 to perform a modulation operation. Further, the relay substrate 14 relays the electrical signal for operating point adjustment or the like, power supply, and control signal inputted from the signal pin 5 to the optical modulation element 3. The conductive pattern of the relay substrate 14 is respectively connected to a pad (not shown) that forms one end of the electrode of the optical modulation element 3 by, for example, wire bonding or the like. Although the relay substrate 14 is illustrated as a single substrate in FIG. 1, the relay substrate 14 may be divided into a plurality of substrates as required. Furthermore, the drive circuit 17 may be mounted on the relay substrate 14 as shown in FIG. 1, or may be disposed between the relay substrate 14 and the optical modulation element 3. Besides, the interface used for inputting the high frequency electrical signal may be an FPC (flexible printed circuit board) arranged outside the housing 2, instead of the signal pin 4.

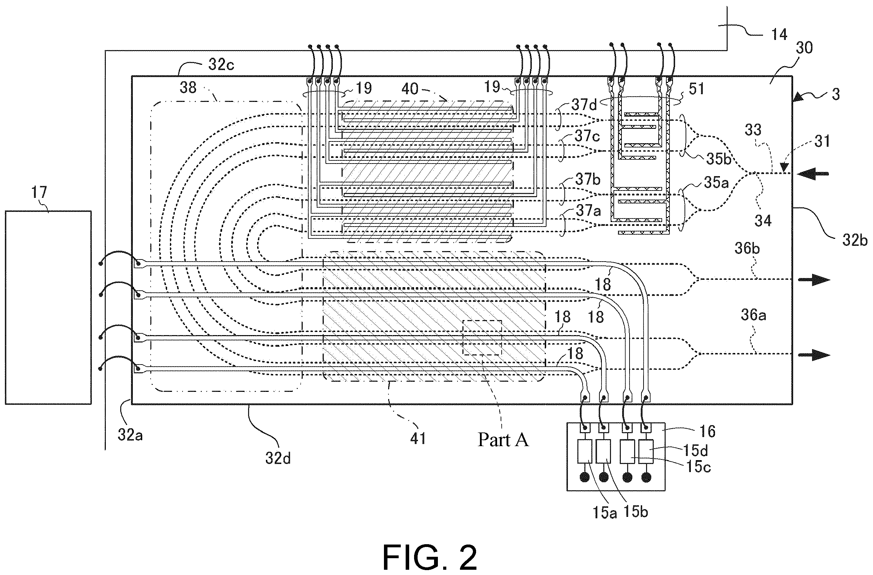

FIG. 2 is a diagram showing an example of the configuration of the optical modulation element 3, which is a DP-QPSK modulator or the like. The optical modulation element 3 includes an optical waveguide 31 (the entirety thereof is indicated by thick dotted lines in the drawing) formed on one main surface (the surface shown in FIG. 2) of the optical substrate 30 and performs coherent multi-level modulation exceeding 100 GBaud, for example. The optical substrate 30 is, for example, an X-cut LN substrate processed into a thin film having a thickness of 20 µm or less (for example, 2 µm) and having an electro-optic effect. In addition, the optical waveguide 31 is a convex optical waveguide (for example, a rib-type optical waveguide or a ridgetype optical waveguide) formed on a surface of the thin-film optical substrate 30 and having a convex portion that extends in a band shape.

The optical substrate 30 is, for example, rectangular, and has two sides 32a and 32b on the left and right of the drawing that extend in the up-down direction of the drawing and face each other, and two sides 32c and 32d on the top and bottom of the drawing that extend in the left-right direction of the drawing and face each other.

The optical waveguide 31 includes an input waveguide 33 and a branch waveguide 34. The input waveguide 33 receives input light (the arrow pointing to the right of the drawing) from the input optical fiber 6 on the upper side of the drawing of the right side 32b of the optical substrate 30. The branch waveguide 34 branches the input light into two lights that have the same amount of light. The optical waveguide 31 also includes so-called nested Mach-Zehnder type optical waveguides 35a and 35b, which are two modulation parts that modulate the respective lights branched by the branch waveguide 34.

The nested Mach-Zehnder type optical waveguides 35a and 35b turn the propagation direction of the light by 180 degrees at a folding region 38 in the left part of the drawing on the optical substrate 30, and output the light from the side 32b of the optical substrate 30 to the right of the drawing by output waveguides 36a and 36b.

The nested Mach-Zehnder type optical waveguides 35a and 35b respectively include two Mach-Zehnder type optical waveguides 37a and 37b and two Mach-Zehnder type optical waveguides 37c and 37d that are respectively provided in two waveguide portions which form a pair of parallel waveguides. Hereinafter, the Mach-Zehnder type optical waveguides 37a, 37b, 37c, and 37d will also be collectively referred to as Mach-Zehnder type optical waveguides 37. According to the conventional technique, the Mach-Zehnder type optical waveguides 37 each include two parallel waveguides.

A bias electrode part 40 in the upper part of the drawing of the nested Mach-Zehnder type optical waveguides 35a and 35b, which are folded back at the folding region 38 in the left part of the drawing on the optical substrate 30, is provided with, for example, bias electrodes 19 for adjusting the operating point of each of the four Mach-Zehnder type optical waveguides 37a, 37b, 37c, and 37d of the nested Mach-Zehnder type optical waveguides 35a and 35b, according to the conventional technique. Furthermore, bias electrodes 51 are formed on the optical substrate 30 to adjust the operating points of the nested Mach-Zehnder type optical waveguides 35a and 35b.

Additionally, in an RF electrode part 41 in the lower part of the drawing of the nested Mach-Zehnder type optical waveguides 35a and 35b folded back at the folding region 38, four center electrodes 18 through which the high frequency electrical signal is propagated are respectively arranged between two parallel waveguides of the corresponding Mach-Zehnder type optical waveguide 37 so as to perform a modulation operation for each of the total four Mach-Zehnder type optical waveguides 37a, 37b, 37c, and 37d that constitute the nested Mach-Zehnder type optical waveguides 35a and 35b.

In FIG. 2, each of the center electrodes 18 constitutes a distributed constant line having a predetermined impedance together with two ground electrodes (not shown) that are formed on the main surface of the optical substrate 30 so as to sandwich the center electrode 18 from a certain distance apart, according to the conventional technique.

Thus, four drive signals output from the drive circuit 17 are respectively input to the corresponding center electrodes 18 from the left side of FIG. 2, become traveling waves and propagate through the center electrodes 18 toward the right side of the drawing, and are terminated by the corresponding terminal resistors 15 after the light waves propagating through the corresponding Mach-Zehnder type optical waveguides 37 are modulated in the RF electrode part 41.

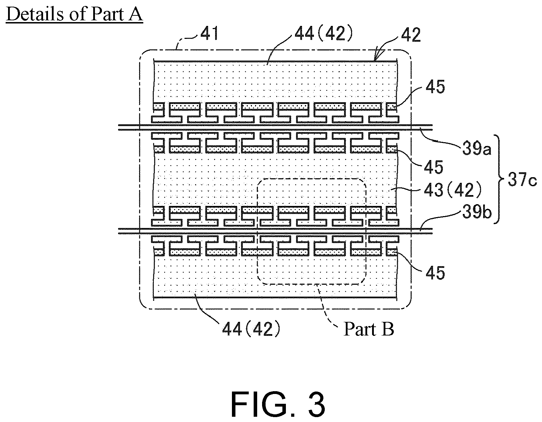

FIG. 3 is a partial detailed view of part A in FIG. 2, and is a view showing the electrode configuration of the Mach-Zehnder type optical waveguide 37c in the RF electrode part 41. The other Mach-Zehnder type optical waveguides 37a, 37b, and 37d in the RF electrode part 41 have similar electrode configurations to the Mach-Zehnder type optical waveguide 37c shown in FIG. 3. In FIG. 3, light enters from the left side of the drawing and exits from the right side of the drawing.

The optical modulation element 3, which is an optical waveguide element, includes a control electrode 42 in the RF electrode part 41 to control the light waves propagating through the Mach-Zehnder type optical waveguide 37c. The control electrode 42 includes one first control electrode 43 and two second control electrodes 44. Here, the first control electrode 43 is a part of the center electrode 18 described above, and actually extends from left to right in the drawing to be connected to other portions of the center electrode 18. Further, the two second control electrodes are ground electrodes that respectively sandwich the center electrode 18 from a certain distance apart, and are connected to a ground potential via the conductive pattern (not shown) that extends on the main surface of the optical substrate 30, according to the conventional technique.

On the main surface of the optical substrate 30, the first control electrode 43, which is a part of the center electrode 18, is arranged between the parallel waveguides 39a and 39b of the Mach-Zehnder type optical waveguide 37c, which is a part of the optical waveguide 31. The two second control electrodes 44, which are ground electrodes, are arranged at positions facing the first control electrode 43 across the parallel waveguides 39a and 39b. The first control electrode 43 and the second control electrodes 44 are made of, for example, gold (Au), and chromium (Cr) may be used as the base metal to improve adhesion to the optical substrate 30.

Hereinafter, the parallel waveguides 39a and 39b will also be collectively referred to as parallel waveguides 39.

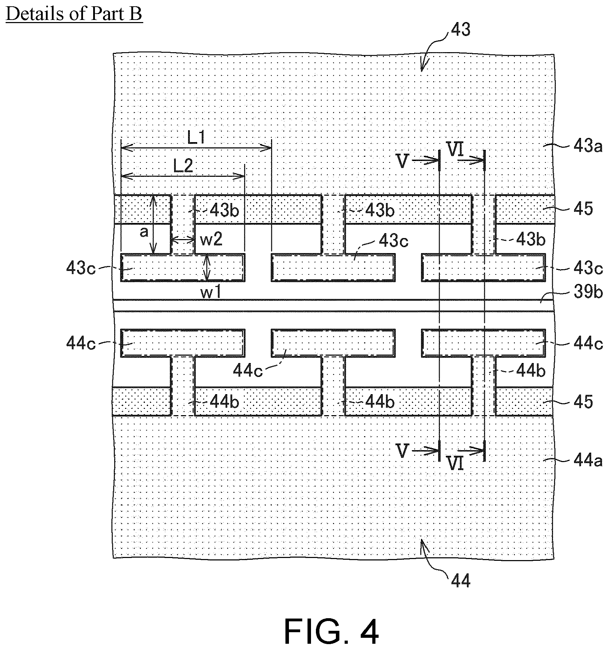

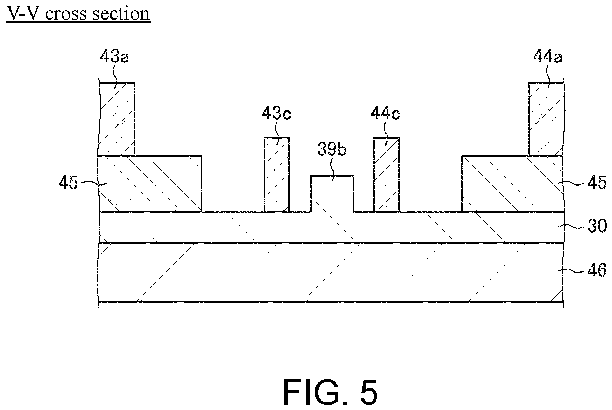

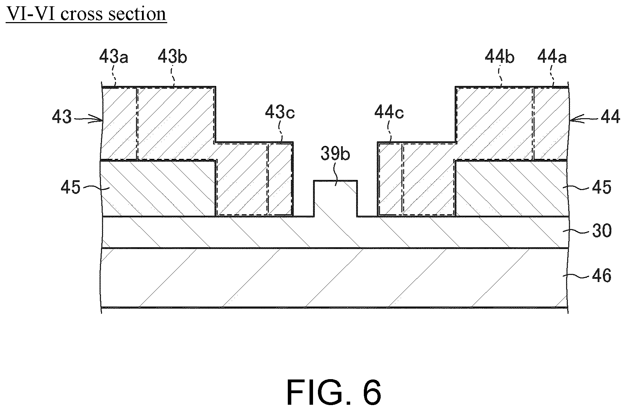

FIG. 4 is a partial detailed view of part B of the RF electrode part 41 shown in FIG. 3. FIG. 5 and FIG. 6 are cross-sectional views taken along line V-V and line VI-VI of part B shown in FIG. 4.

Part B shown in FIG. 4 illustrates one of the second control electrodes 44 and the first control electrode 43 that face each other across one parallel waveguide 39b of the Mach-Zehnder type optical waveguide 37c. The other second control electrode 44 and the first control electrode 43 that face each other across the other parallel waveguide 39a in FIG. 2 are configured similarly to the configuration shown in FIG. 4.

As shown in FIG. 4, the first control electrode 43 includes a common electrode 43a and a plurality of segment electrodes 43c. The common electrode 43a extends along the parallel waveguide 39b and propagates a high frequency signal. The segment electrodes 43c are divided along the extending direction of the parallel waveguide 39b and arranged closer to the parallel waveguide 39b than the common electrode 43a. The first control electrode 43 further includes a plurality of connection electrodes 43b that respectively connect the plurality of segment electrodes 43c to the common electrode 43a.

Similarly, the second control electrode 44 includes a common electrode 44a and a plurality of segment electrodes 44c. The common electrode 44a extends along the parallel waveguide 39b and propagates a high frequency signal. The segment electrodes 44c are divided along the extending direction of the parallel waveguide 39b and arranged closer to the parallel waveguide 39b than the common electrode 44a. The second control electrode 44 further includes a plurality of connection electrodes 44b that respectively connect the plurality of segment electrodes 44c to the common electrode 44a.

Then, as shown in FIG. 5 and FIG. 6, a low dielectric layer 45 that has a lower relative dielectric constant than the optical substrate is arranged between the lower portions of the common electrodes 43a and 44a and the optical substrate 30. The relative dielectric constant of the low dielectric layer 45 is preferably 1 or more and 10 or less. The low dielectric layer 45 may extend to a part of the connection electrodes 43b and 44b, as shown in FIG. 4 and FIG. 6. The low dielectric layer 45 may be made of, for example, SiO₂, low dielectric resin such as BCB (benzocyclobutene), silicon nitride, or the like.

In the optical modulation element 3 having the above configuration, an optical modulation operation is performed by applying an electric field to the parallel waveguide 39 using the segment electrodes 43c and 44c provided close to the parallel waveguide 39, which may achieve low voltage driving. Furthermore, since the optical modulation element 3 has the low dielectric layer 45 between the common electrodes 43a and 44a through which the high frequency signal propagates and the optical substrate 30, the propagation speed of the high frequency signal in the common electrodes 43a and 44a (hereinafter also referred to as signal propagation speed) may be increased to improve the consistency (degree of coincidence) between the propagation speed of light waves propagating through the parallel waveguide 39b (hereinafter also referred to as waveguide speed) and the signal propagation speed. Thereby, the optical modulation element 3 is capable of achieving low voltage driving at a high modulation speed.

Although the low dielectric layer 45 is configured to extend to the middle of the connection electrodes 43b and 44b in the example shown in FIG. 3, FIG. 4, FIG. 5, and FIG. 6, the low dielectric layer 45 may be configured to extend to the entire connection electrodes 43b and 44b.

From the viewpoint of achieving high-speed modulation and low voltage driving, the low dielectric layer 45 is preferably configured with a thickness of 0.1 µm or more and 20 µm or less, which is appropriate for light speed matching.

In addition, in this embodiment, preferred sizes of the first control electrode 43 and the second control electrode 44 are as follows. The length a (see FIG. 4) of the connection electrodes 43b and 44b from the common electrodes 43a and 44a to the segment electrodes 43c and 44c, respectively, is 1 µm or more and 50 µm or less. Further, the width W2 of the connection electrodes 43b and 44b measured in the extending direction of the parallel waveguide 39b is 1 µm or more and 10 µm or less. Further, the width W1 of the segment electrodes 43c and 44c measured in the direction perpendicular to the extending direction of the parallel waveguide 39b is 1 µm or more and 10 µm or less.

Furthermore, the pitch L1 between the segment electrodes 43c and between the segment electrodes 44c measured in the extending direction of the parallel waveguide 39b is 20 µm or more and 500 µm or less. Further, the length L2 of the segment electrodes 43c and 44c measured in the extending direction of the parallel waveguide 39b is L 1/2 or more and (L1-1 µm) or less.

In this embodiment, as a more preferable configuration, the other main surface of the optical substrate 30, opposite to the main surface on which the optical waveguide 31 is arranged, is joined to a low dielectric substrate 46 so as to be in contact with the low dielectric substrate 46 (see FIG. 5 and FIG. 6). The low dielectric substrate 46 is made of a material having a lower relative dielectric constant than the optical substrate, preferably, a low dielectric material having a relative dielectric constant of 1 or more and 10 or less. Thereby, it is easier to increase the propagation speed of the high frequency signal in the control electrode 42, and the degree of freedom in designing the control electrode 42 is improved. The low dielectric material constituting the low dielectric substrate 46 preferably has a coefficient of linear expansion of 0.5×10⁻⁶ or more and 10×10⁻⁶ or less from the viewpoint of reducing stress at the boundary between the optical substrate 30 and the low dielectric substrate 46 that may occur due to fluctuations in operating temperature. Such a low dielectric material may be, for example, SiO₂. The thickness of the low dielectric substrate 46 is preferably 0.1 µm or more and 1000 µm or less, for example.

In the case of using the low dielectric substrate 46 having a thickness of 300 µm or less, a holding substrate (not shown) may be attached to the back surface of the low dielectric substrate 46 (that is, the surface opposite to the surface to be joined to the optical substrate 30) to reinforce the mechanical strength of the optical modulation element 3. Such a holding substrate may be made of, for example, Si or glass.

Next, modified examples of the optical modulation element 3, which is an optical waveguide element, will be described.

### [First modified example]

As the first modified example of the optical modulation element 3, the low dielectric layer 45 may extend below the connection electrodes 43b and 44b and the segment electrodes 43c and 44c.

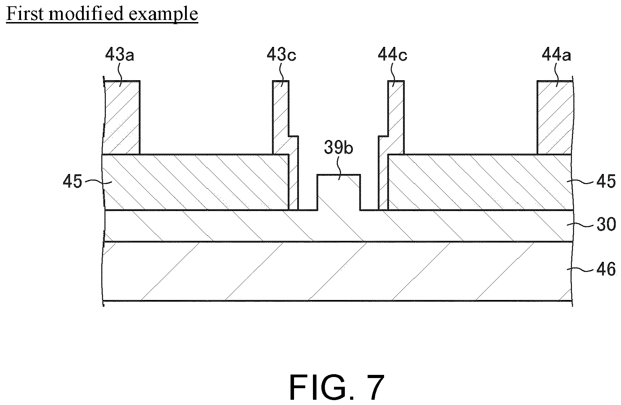

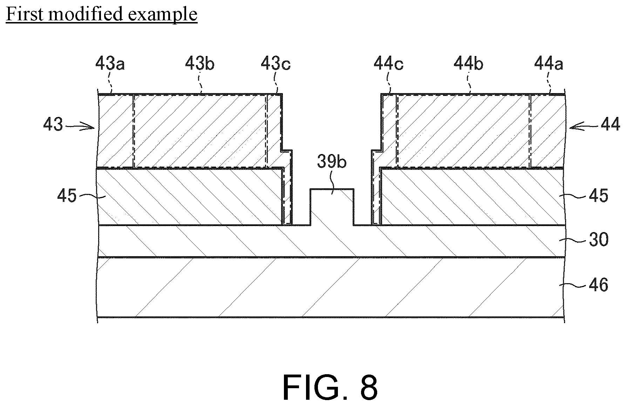

FIG. 7 and FIG. 8 are views showing the configuration of the control electrode 42 of the optical modulation element 3 according to such a first modified example. Here, FIG. 7 and FIG. 8 are views corresponding to the V-V cross-sectional view shown in FIG. 5 and the VI-VI cross-sectional view shown in FIG. 6, respectively. In the example shown in FIG. 7 and FIG. 8, the low dielectric layer 45 extends from below the common electrodes 43a and 44a to below the segment electrodes 43c and 44c, respectively. The portions of the first control electrode 43 and the second control electrode 44 sandwiching the parallel waveguide 39a are also configured similarly to the configuration shown in FIG. 7 and FIG. 8.

Thus, with the optical modulation element 3 according to the first modified example, it is easy to increase the propagation speed of microwaves (electrical signal) and match the speeds of light and electrical signal throughout the entire first control electrode and the entire second control electrode 44 including the segment electrodes 44c.

Although the low dielectric layer 45 extends from below the common electrodes 43a and 44a to the middle below the segment electrodes 43c and 44c, respectively, in the example of FIG. 7 and FIG. 8, the low dielectric layer 45 may extend to the entirety below the segment electrodes 43c and 44c.

However, as shown in FIG. 7 and FIG. 8, each of the segment electrodes 43c and 44c is configured so that at least the lower portion of the surface adjacent to the parallel waveguide 39b is formed on the optical substrate 30 without the low dielectric layer 45 therebetween, thereby increasing the strength of the electric field that the segment electrodes 43c and 44c give to the parallel waveguide 39b, improving the electric field efficiency in the optical modulation operation (that is, the ratio of the electric field used for the optical modulation operation to the electric field generated by the control electrode 42), and reducing the driving voltage required for operating the optical modulation element 3.

In general, metal materials such as nickel and titanium that are used as the electrode base film when forming electrodes of gold or the like have higher adhesion to the surface of the optical substrate 30 made of LN or the like, which has an elastic modulus equal to or higher than the elastic modulus of these metal materials and is highly hydrophilic, compared to adhesion to the surface of the low dielectric layer 45 made of resin or the like. Therefore, with the configuration as described above, the portions of the segment electrodes 43c and 44c formed on the optical substrate 30 without the low dielectric layer 45 therebetween have improved adhesion to the optical substrate 30, which may, as a result, improve the reliability of the optical modulation element 3.

### [Second modified example]

As the second modified example of the optical modulation element 3, in the cross section perpendicular to the extending direction of the parallel waveguide 39, the low dielectric layer 45 preferably has a curved corner between the side adjacent to the optical waveguide and the upper side that is a side far from the substrate.

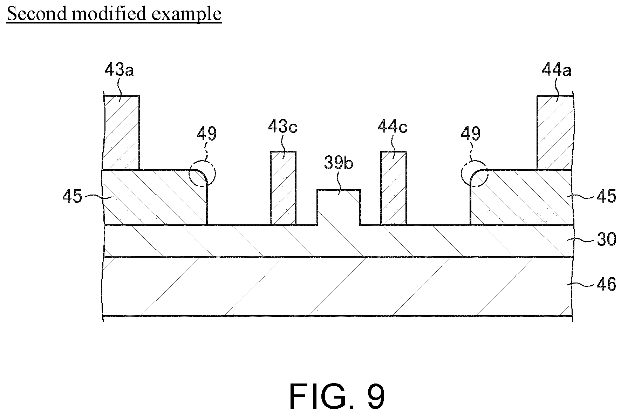

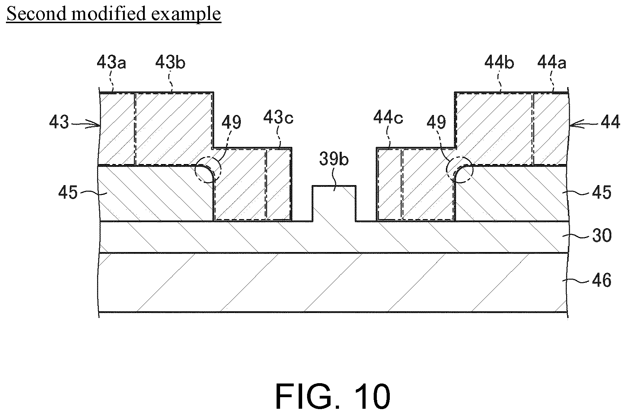

FIG. 9 and FIG. 10 are views showing the configuration of the control electrode 42 of the optical modulation element 3 according to such a second modified example. Here, FIG. 9 and FIG. 10 are views corresponding to the V-V cross-sectional view shown in FIG. 5 and the VI-VI cross-sectional view shown in FIG. 6, respectively. As shown in FIG. 9 and FIG. 10, the low dielectric layer 45 extending below the common electrodes 43a and 44a each has an R part 49 that is curved (portion within the circle indicated by the dashed line shown in FIG. 9 and FIG. 10) at the corner between the side adjacent to the parallel waveguide 39b and the upper side that is the side far from the optical substrate 30, in the cross section perpendicular to the extending direction of the parallel waveguide 39b (that is, in the cross section shown in FIG. 9 and FIG. 10). The portions of the first control electrode 43 and the second control electrode 44 sandwiching the parallel waveguide 39a are also configured similarly to the configuration shown in FIG. 9 and FIG. 10.

Thus, in the optical modulation element 3 according to the second modified example, the thickness of the conductor of the control electrode 42 at the transition portion from the conductor portion formed on top of the low dielectric layer 45 to the conductor portion formed on the optical substrate 30 without the low dielectric layer 45 therebetween changes continuously, which may reduce loss (for example, radiation loss) of the high frequency signal that propagates through the transition portion. Particularly, in the case where a corner having the R part 49 is provided at the lower part of the connection electrodes 43b and 44b having a narrow line width, stress on the connection electrodes 43b and 44b that may occur at the corner may be reduced to further improve the reliability of the optical modulation element 3, compared to a case where the corner has a bent shape.

### [Third modified example]

As the third modified example of the optical modulation element 3, a buffer layer may be provided between the segment electrodes 43c and 44c and the optical substrate 30.

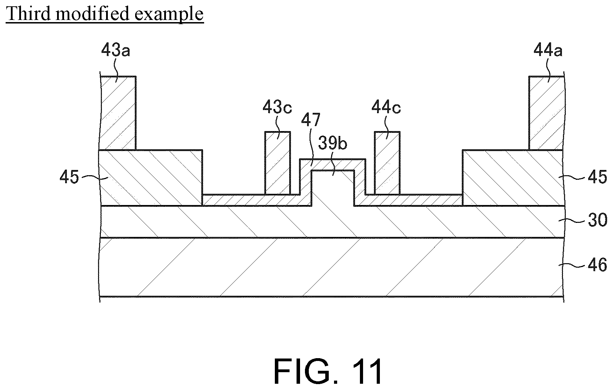

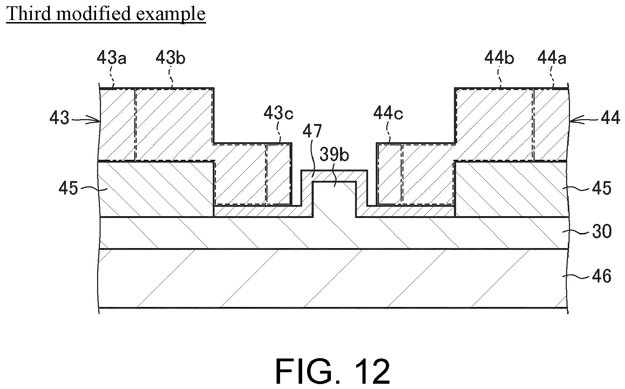

FIG. 11 and FIG. 12 are views showing the configuration of the control electrode 42 of the optical modulation element 3 according to such a third modified example. Here, FIG. 11 and FIG. 12 are views corresponding to the V-V cross-sectional view shown in FIG. 5 and the VI-VI cross-sectional view shown in FIG. 6, respectively. In the illustrated example, a buffer layer 47 is arranged to cover the parallel waveguide 39b and extend below the segment electrodes 43c and 44c. The buffer layer 47 may also be arranged for the portions of the first control electrode 43 and the second control electrode 44 sandwiching the parallel waveguide 39a in the same manner as in the configuration shown in FIG. 11 and FIG. 12. The buffer layer 47 extends along the length direction of the parallel waveguide 39 (the normal direction to the plane of the paper of FIG. 11 and FIG. 12).

Thus, the metal (for example, Au, Cr or the like) constituting the segment electrodes 43c and 44c arranged close to the parallel waveguide 39 may prevent loss of light waves propagating through the parallel waveguide 39 (so-called light absorption loss).

Generally, the amount of off-light in the on/off operation of output light in the optical modulation element 3 is determined by stray light propagating within the optical substrate 30, and does not depend much on the above-mentioned light absorption loss. On the other hand, the amount of on-light in the on/off operation depends on the light absorption loss and the magnitude of the driving voltage. Therefore, when the light absorption loss is large, the amount of on-light decreases even with the same driving voltage, and the extinction ratio of the modulated light output from the optical modulation element 3 deteriorates.

In contrast thereto, in the configuration that includes the buffer layer as described above, the light absorption loss may be reduced to ensure a high extinction ratio, so the driving voltage required to obtain a predetermined extinction ratio may be reduced.

Although the buffer layer 47 is not formed below the low dielectric layer 45 in the example shown in FIG. 10 and FIG. 11, the buffer layer 47 may be formed over the entire optical substrate 30 including the bottom of the low dielectric layer 45.

### [Fourth modified example]

As the fourth modified example of the optical modulation element 3, the low dielectric layer 45 has one or more through holes extending in the thickness direction of the low dielectric layer 45, and the control electrode 42 is configured to extend through the through hole to reach the main surface of the optical substrate.

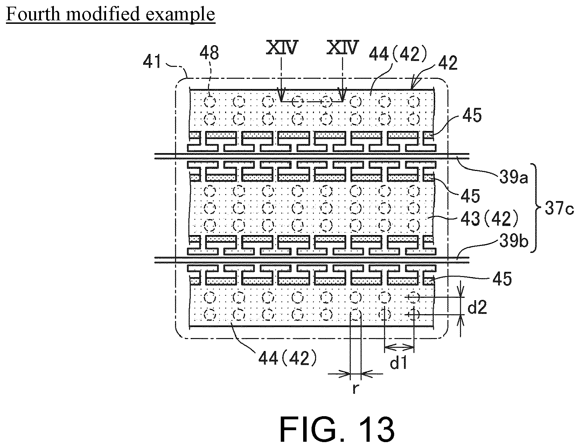

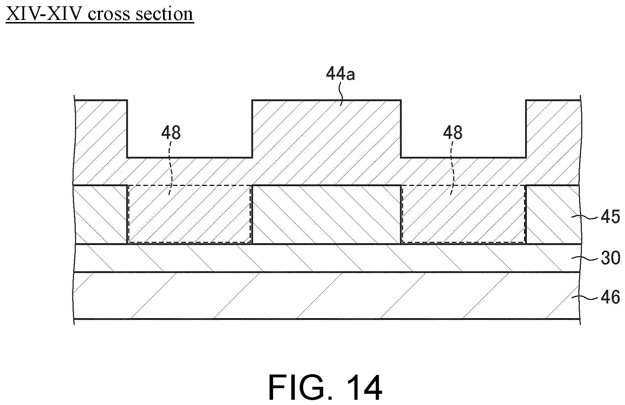

FIG. 13 and FIG. 14 are views showing the configuration of the control electrode 42 of the optical modulation element 3 according to such a fourth modified example. Here, FIG. 13 is a view corresponding to FIG. 3 showing the configuration of the RF electrode part 41 in the Mach-Zehnder type optical waveguide 37c. Further, FIG. 14 is a cross-sectional view taken along line XIV-XIV in FIG. 13. In the example shown in FIG. 13, a plurality of through holes 48 (circles indicated by dotted lines in the drawing), which are circular in plan view, are arranged in a matrix in the low dielectric layer 45 arranged below the first control electrode 43 and the second control electrode 44. Then, as shown in FIG. 14, for example, the common electrode 44a of the second control electrode 44 extends to the main surface of the optical substrate 30 through the through holes 48 (rectangles indicated by dotted lines in the drawing). Although in FIG. 13, only one through hole 48 is labeled with a reference numeral as an example, all the circles indicated by dotted lines in the drawing represent the through holes 48.

As a result, the control electrode 42 passes through the through holes 48 and directly comes into close contact with the optical substrate 30. Therefore, similar to the configuration of FIG. 7 and FIG. 8 described above, for example, even when the low dielectric layer 45 is made of resin, the adhesion between the control electrode 42 and the optical substrate 30 may be increased to improve the reliability of the optical modulation element 3.

From the viewpoint of ensuring adhesion between the control electrode 42 and the optical substrate 30, the diameter r (see FIG. 13) of the through hole 48 is preferably 1 µm or more and 25 µm or less, for example. In addition, from a similar viewpoint, the arrangement intervals d1 and d2 between the through holes 48 in the extending direction of the parallel waveguide 39 and the direction perpendicular thereto are preferably 50 µm or more and 500 µm or less.

Nevertheless, the through hole 48 is not limited to a circular shape, and may have any shape in plan view. In this case, it is desirable to configure the through hole 48 so that the opening area thereof on the side of the optical substrate 30 is approximately the same as the opening area of the circular through hole having a diameter of 1 µm or more and 25 µm or less in plan view. Furthermore, the through holes 48 are not necessarily arranged in a matrix, and may be arranged in any regular pattern or irregular pattern. Even in this case, the arrangement interval between the through holes 48 is preferably 50 µm or more and 500 µm or less.

### [Fifth modified example]

As the fifth modified example of the optical modulation element 3, the through holes 48 shown in the fourth modified example described above may be formed only for the second control electrode 44 and not for the first control electrode 43.

### [Sixth modified example]

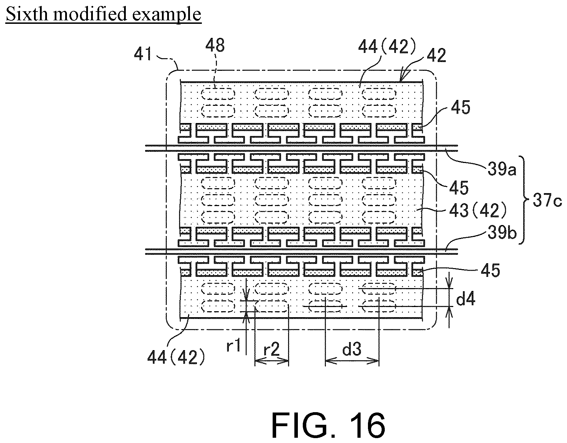

As the sixth modified example of the optical modulation element 3, as shown in FIG. 16, the through hole 48 shown in the fourth modified example described above may not be circular in plan view, and may be an ellipse that extends in the extending direction of the parallel waveguides 39a and 39b.

This configuration is capable of increasing the area of the through hole 48 to improve the adhesion between the control electrode 42 and the optical substrate 30, and preventing the propagation of the high frequency signal in the control electrode 42 from being inhibited by the through hole 48.

In FIG. 16, preferably the length r2 of the elliptical through hole 48 is at least twice the width r1 and at most 10 times the width r1. Further, regarding the arrangement interval between adjacent through holes 48, preferably the arrangement interval d2 in the length direction of the through holes 48 is at least twice the arrangement interval d1 in the width direction and at most 10 times.

### [Seventh modified example]

As the seventh modified example of the optical modulation element 3, each portion of the optical waveguide 31, which is a convex optical waveguide, may be formed by a band-shaped convex portion sandwiched between two grooves extending at a predetermined separation distance from each other on the main surface of the optical substrate 30.

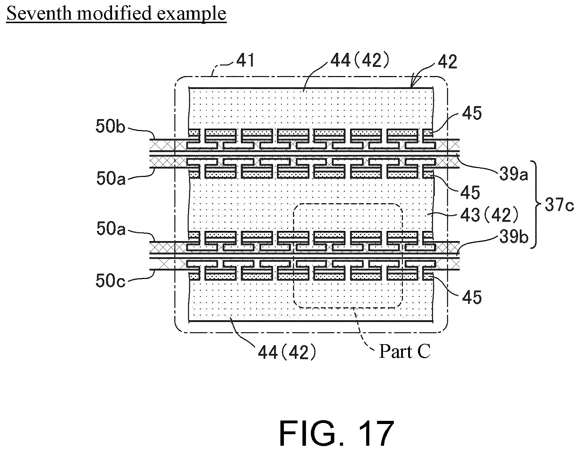

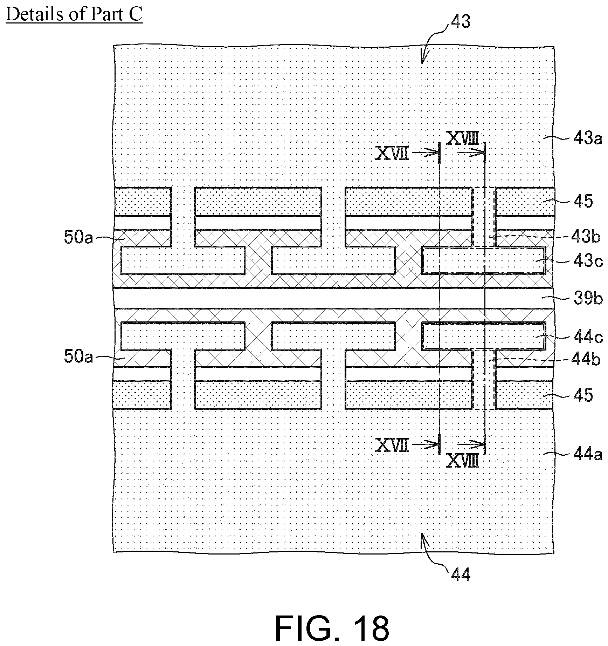

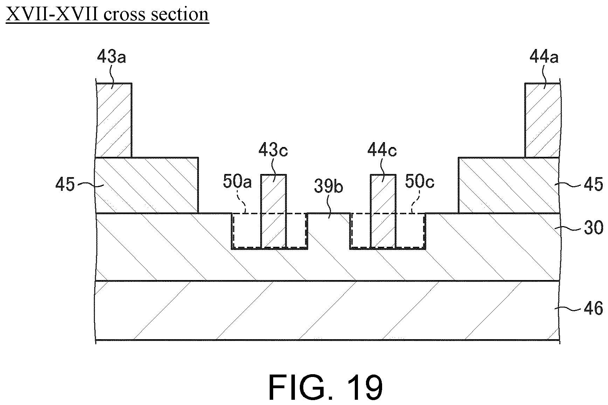

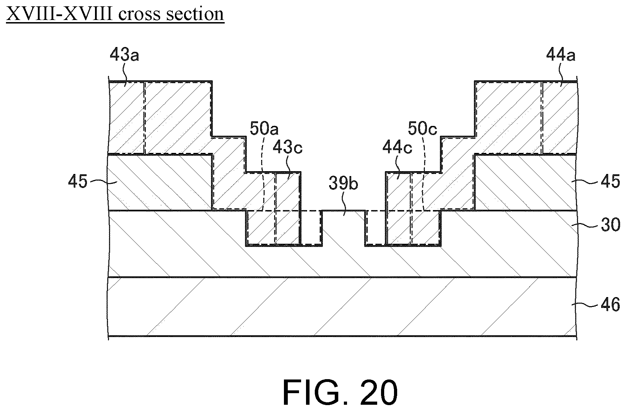

FIG. 17, FIG. 18, FIG. 19, and FIG. 20 are views showing the configuration of the Mach-Zehnder type optical waveguide 37c of the optical modulation element 3 according to such a seventh modified example, and are views corresponding to FIG. 3, FIG. 4, FIG. 5, and FIG. 6. Here, FIG. 18 is a partial detailed view of part C in FIG. 17. In addition, FIG. 19 and FIG. 20 are a cross-sectional view taken along line XVII-XVII and a cross-sectional view taken along line XVIII-XVIII in FIG. 18.

As shown in FIG. 17, in this modified example, each portion of the optical waveguide 31 is formed by a band-shaped convex portion sandwiched between any two of grooves 50a, 50b, and 50c extending at a predetermined separation distance on the main surface of the optical substrate 30. Specifically, the parallel waveguide 39a is formed by a convex portion sandwiched between two grooves 50a and 50b, and the parallel waveguide 39b is formed by a convex portion sandwiched between two grooves 50a and 50c.

FIG. 18, FIG. 19, and FIG. 20 are a plan view and cross-sectional views of the vicinity of the parallel waveguide 39b, and as described above, the parallel waveguide 39b is formed by a convex portion sandwiched between two grooves 50a and 50c.

Thereby, the optical waveguide 31, which is a convex waveguide, may be easily formed on the main surface of the optical substrate 30.

Moreover, the segment electrodes 43c and 44c may be formed on the bottom surfaces of the grooves 50a and 50c, respectively, as shown in FIG. 19 and FIG. 20.

### [Second embodiment]

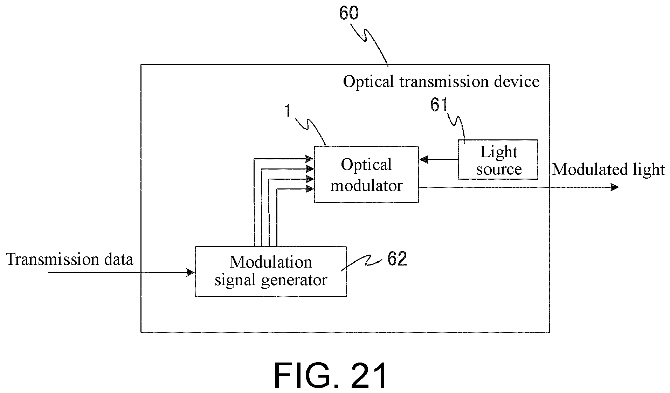

Next, the second embodiment of the disclosure will be described. This embodiment is an optical transmission device 60 equipped with the optical modulator 1 according to the first embodiment or the modified examples thereof. FIG. 21 is a diagram showing the configuration of the optical transmission device 60 according to this embodiment. This optical transmission device 60 includes the optical modulator 1, a light source 61, and a modulation signal generator 62. The modulation signal generator 62 is an electronic circuit configured to generate a high frequency signal (modulation signal) for causing the optical modulator 1 to perform a modulation operation. For example, the modulation signal generator 62 generates four modulation signals to be input to the optical modulation element 3 included in the optical modulator 1, based on transmission data given from the outside, and inputs the modulation signals to the signal pin 4 of the optical modulator 1. Thereby, the optical modulator 1 modulates the light from the light source 61 that is incident from the input optical fiber 6, and outputs the modulated light through the output optical fiber 7.

Since the optical transmission device 60 having the above configuration uses the optical modulator 1 described above, low voltage driving at a high modulation speed becomes possible, achieving reduction in power consumption and size.

### [Other embodiments]

The various modified examples of the first embodiment described above may be arbitrarily combined to form one optical waveguide element (for example, the optical modulation element 3). For example, the R part 49 of the low dielectric layer 45 in the second modified example (see FIG. 9, etc.) and/or the through holes 48 of the low dielectric layer 45 in the fourth modified example (see FIG. 13, etc.) may be applied in combination in all the other modified examples.

Furthermore, the optical waveguide element in the disclosure is not limited to the optical modulation element 3 that performs an optical modulation operation using a nested Mach-Zehnder type optical waveguide, and may be various types of optical waveguide elements that achieve any function using optical waveguides formed in arbitrary patterns. For example, the optical waveguide element may include not only a Mach-Zehnder type optical waveguide but also a directional coupler type waveguide and/or a Y-branch waveguide, and achieve a function such as optical switching.

It should be noted that the disclosure is not limited to the configurations of the above embodiments and alternative configurations thereof, and may be implemented in various forms without departing from the spirit thereof.

### [Configurations supported by the above embodiments]

The embodiments and modified examples described above support the following configurations.

(Configuration 1) An optical waveguide element includes an optical waveguide arranged on a main surface of an optical substrate; and a control electrode configured to control light waves propagating through the optical waveguide. The control electrode includes a first control electrode and a second control electrode facing each other across the optical waveguide on the main surface of the optical substrate. Each of the first control electrode and the second control electrode includes a common electrode extending along the optical waveguide, a plurality of segment electrodes arranged closer to the optical waveguide than the common electrode and divided along an extending direction of the optical waveguide, and a plurality of connection electrodes connecting each of the plurality of segment electrodes to the common electrode. A low dielectric layer having a relative dielectric constant lower than a relative dielectric constant of the optical substrate is arranged between the common electrode and the optical substrate.

The optical waveguide element of Configuration 1 is capable of applying an electric field to the optical waveguide using the segment electrodes arranged close to the optical waveguide while increasing the propagation speed of the high frequency signal in the common electrode, and therefore is capable of achieving low voltage driving at a high operating speed.

(Configuration 2) In the optical waveguide element according to Configuration 1, the low dielectric layer extends to below the connection electrodes and the segment electrodes.

The optical waveguide element of Configuration 2 is capable of reducing the waveguide loss of the high frequency signal in the control electrode and reducing the power required for the optical modulation operation.

(Configuration 3) In the optical waveguide element according to Configuration 1 or 2, the optical waveguide includes a Mach-Zehnder type optical waveguide that includes two parallel waveguides. The control electrode includes one first control electrode arranged between the two parallel waveguides; and two second control electrodes facing the first control electrode respectively across the two parallel waveguides.

The optical waveguide element of Configuration 3 is capable of achieving low voltage driving at a high operating speed in an optical waveguide including a Mach-Zehnder type optical waveguide.

(Configuration 4) In the optical waveguide element according to any one of Configurations 1 to 3, at least a lower portion of a surface, adjacent to the optical waveguide, of the segment electrode is formed on the optical substrate without the low dielectric layer therebetween.

The optical waveguide element of Configuration 4 is capable of disposing a portion of the segment electrode adjacent to the optical waveguide on the optical substrate and close to the optical waveguide while disposing the low dielectric layer below the segment electrode. Therefore, the optical waveguide element of Configuration 3 is capable of reducing the driving voltage while increasing the adhesion between the segment electrode and the optical substrate and improving reliability.

(Configuration 5) In the optical waveguide element according to any one of Configurations 1 to 4, the low dielectric layer includes a curved corner between a side adjacent to the optical waveguide and an upper side that is a side far from the optical substrate, in a cross section perpendicular to the extending direction of the optical waveguide.

According to the optical waveguide element of Configuration 5, the corner of the low dielectric layer is curved, so the conductor thickness of the control electrode at the transition portion from the conductor portion formed on the low dielectric layer to the conductor portion formed directly on the optical substrate changes continuously through the curve. Therefore, compared to a case where the corner has a bent shape, the optical modulation element of Configuration 4 is capable of reducing loss (for example, radiation loss) of the high frequency signal that propagates through the transition portion, and is capable of reducing stress that may occur in the control electrode formed on top of the corner to further improve the reliability of the optical waveguide element.

(Configuration 6) In the optical waveguide element according to any one of Configurations 1 to 5, an other main surface of the optical substrate, opposite to the main surface on which the optical waveguide is arranged, is in contact with a low dielectric substrate composed of a low dielectric material with a relative dielectric constant of 1 or more and 10 or less.

According to the optical waveguide element of Configuration 6, the propagation speed of the high frequency signal in the control electrode is easily increased, and the degree of freedom in designing the control electrode is improved.

(Configuration 7) The optical waveguide element according to any one of Configurations 1 to 6 further includes a buffer layer between the segment electrodes and the optical substrate.

The optical waveguide element of Configuration 7 is capable of preventing light absorption loss of light waves propagating through the optical waveguide with the metal constituting the segment electrodes arranged close to the optical waveguide.

(Configuration 8) In the optical waveguide element according to any one of Configurations 1 to 7, the low dielectric layer has one or more through holes extending in a thickness direction of the low dielectric layer, and the control electrode extends through the one or more through holes to the optical substrate.

According to the optical waveguide element of Configuration 8, the control electrode has a portion that passes through the through hole and comes into direct contact with the optical substrate. Thus, for example, even when the low dielectric layer is made of resin, the adhesion between the control electrode and the optical substrate may be increased to improve the reliability of the optical waveguide element.

(Configuration 9) An optical modulator includes the optical waveguide element according to any one of Configurations 1 to 8, which is an optical modulation element; a housing configured to accommodate the optical waveguide element; an optical fiber configured to input light to the optical waveguide element; and an optical fiber configured to guide light output by the optical waveguide element to outside of the housing.

The optical modulator of Configuration 9 is capable of achieving an optical modulation operation that enables low voltage driving at a high modulation speed.

(Configuration 10) An optical transmission device includes the optical modulator according to Configuration 9; and an electronic circuit configured to generate an electrical signal for causing the optical waveguide element to perform an optical modulation operation.

According to the optical transmission device of Configuration 10, low voltage driving at a high modulation speed becomes possible, achieving reduction in power consumption and size.

### Reference Signs List

1... optical modulator; 2... housing; 3... optical modulation element; 4, 5... signal pin; 6... input optical fiber; 7... output optical fiber; 8, 9... support; 10a, 10b, 10c, 11a, 11b... lens; 12... beam shifter; 14... relay substrate; 15, 15a, 15b, 15c, 15d... terminal resistor; 16... terminator; 17... drive circuit; 18... center electrode; 19, 51... bias electrode; 30... optical substrate; 31... optical waveguide; 32a, 32b, 32c, 32d... side; 33... input waveguide; 34... branch waveguide; 35, 35a, 35b... nested Mach-Zehnder type optical waveguide; 36a, 36b... output waveguide; 37a, 37b, 37c, 37d... Mach-Zehnder type optical waveguide; 38... folding region; 39a, 39b... parallel waveguide; 40, 40a, 40b... bias electrode part; 41... RF electrode part; 42... control electrode; 43... first control electrode; 44... second control electrode; 43a, 44a... common electrode; 43b, 44b... connection electrode; 43c, 44c... segment electrode; 45... low dielectric layer; 46... low dielectric substrate; 47... buffer layer; 48... through hole; 49... R part; 50a, 50b, 50c... groove; 60... optical transmission device; 61... light source; 62... modulation signal generator.

## Claims

1. An optical waveguide element (3), comprising:
an optical waveguide (31) arranged on a main surface of an optical substrate (30); and
a control electrode (42) configured to control light waves propagating through the optical waveguide,
wherein the control electrode comprises a first control electrode (43) and a second control electrode (44) facing each other across the optical waveguide on the main surface of the optical substrate,
each of the first control electrode and the second control electrode comprises a common electrode (43 a, 44a) extending along the optical waveguide, a plurality of segment electrodes (43 c, 44c) arranged closer to the optical waveguide than the common electrode and divided along an extending direction of the optical waveguide, and a plurality of connection electrodes (43b, 44b) connecting each of the plurality of segment electrodes to the common electrode, and
a low dielectric layer (45) having a relative dielectric constant lower than a relative dielectric constant of the optical substrate is arranged between the common electrode and the optical substrate.

2. The optical waveguide element according to claim 1, wherein the low dielectric layer extends to below the connection electrodes and the segment electrodes.

3. The optical waveguide element according to claim 1, wherein the optical waveguide comprises a Mach-Zehnder type optical waveguide (37a, 37b, 37c, 37d) that comprises two parallel waveguides, and
the control electrode comprises:
one first control electrode arranged between the two parallel waveguides; and
two second control electrodes facing the first control electrode respectively across the two parallel waveguides.

4. The optical waveguide element according to claim 1, wherein at least a lower portion of a surface, adjacent to the optical waveguide, of the segment electrode is formed on the optical substrate without the low dielectric layer therebetween.

5. The optical waveguide element according to claim 1, wherein the low dielectric layer comprises a curved corner (49) between a side adjacent to the optical waveguide and an upper side that is a side far from the optical substrate, in a cross section perpendicular to the extending direction of the optical waveguide.

6. The optical waveguide element according to claim 1, wherein an other main surface of the optical substrate, opposite to the main surface on which the optical waveguide is arranged, is in contact with a low dielectric substrate (46) composed of a low dielectric material with a relative dielectric constant of 1 or more and 10 or less.

7. The optical waveguide element according to claim 1, further comprising a buffer layer (47) between the segment electrodes and the optical substrate.

8. The optical waveguide element according to claim 1, wherein the low dielectric layer has one or more through holes (48) extending in a thickness direction of the low dielectric layer, and
the control electrode extends through the one or more through holes to the optical substrate.

9. An optical modulator (1), comprising:
the optical waveguide element (3) according to any one of claims 1 to 8, which is an optical modulation element;
a housing (2) configured to accommodate the optical waveguide element;
an optical fiber (6) configured to input light to the optical waveguide element; and
an optical fiber (7) configured to guide light output by the optical waveguide element to outside of the housing.

10. An optical transmission device (60), comprising:
the optical modulator (1) according to claim 9; and
an electronic circuit (62) configured to generate an electrical signal for causing the optical waveguide element to perform an optical modulation operation.
